# DEMANDE DE BREVET EUROPEEN

(11) **EP 0 621 674 A1**
(43) Date de publication de la demande: **26.10.1994**
(21) Numéro de dépôt: 94410028.8
(22) Date de dépôt: 14.04.1994
(51) Int. Cl.: H02H 7/22, H02H 11/00, H01H 1/54

(54) **Effecteur à contacts autocompensés pour l'alimentation d'un circuit de récepteur**

(30) Priorité: 23.04.1993 FR 9304926
(71) Demandeur: SCHNEIDER ELECTRIC SA, F-92100 Boulogne-Billancourt (FR)
(72) Inventeur: Dieppedalle, François, F-38050 Grenoble Cédex 09 (FR); Frolla, Alain, F-38050 Grenoble Cédex 09 (FR)
(74) Mandataire: Hecke, Gérard

(57) **Abrégé**

La présente invention concerne un effecteur comportant des contacts de puissance pour l'alimentation d'un récepteur.

L'effecteur (10) comporte en outre un mécanisme de commande (13), des contacts de puissance (11), ce mécanisme étant actionné par un électro-aimant (14). Entre le circuit de puissance pour l'alimentation du récepteur (15) et le circuit de puissance de retour est connectée une unité de mesure et de traitement (18) agencée pour mesurer l'impédance aux bornes du circuit d'alimentation (R) du récepteur. Cette unité est couplée à un contact (19) du circuit de commande C.

Le contact (19) est agencé pour couper l'alimentation du circuit de commande en cas de court-circuit du circuit d'alimentation (R) du récepteur (15).

## Description

La présente invention concerne un effecteur comportant un électro-aimant associé à un mécanisme de commande de contacts de puissance d'un circuit électrique pour l'alimentation d'au moins un récepteur.

On connaît des effecteurs dont les contacts de puissance sont associés à un ressort chargé de maintenir ces contacts en position fermée quel que soit l'état du circuit des récepteurs correspondants.

Ces ressorts sont relativement faibles et en tout cas insuffisants pour compenser les forces de répulsion par striction qui sont générées lors d'un court-circuit dans le circuit d'alimentation des récepteurs. En raison de ces forces, les contacts rebondissent et finissent par se souder. Ceci se produit soit lorsqu'un court-circuit survient alors que les contacts sont fermés soit lorsqu'un opérateur veut fermer les contacts sur un court-circuit du circuit des récepteurs.

Le but de l'invention est de supprimer ce risque de soudure des contacts de puissance.

Ce but est atteint par l'appareil selon l'invention caractérisé en ce que les contacts de puissance sont équipés d'un système de compensation des forces de répulsion de striction résultant d'un court-circuit du circuit d'alimentation du récepteur, en ce qu'il comprend des moyens pour mesurer l'impédance dudit circuit en position ouverte desdits contacts de puissance, et en ce qu'il est pourvu de moyens pour empêcher la fermeture de ces contacts en cas de valeur anormale de cette impédance.

Ce système de compensation peut par exemple être du type électrodynamique ou du type électromagnétique.

La présente invention sera mieux comprise en référence à la description d'exemples de réalisation préférés mais non limitatifs et aux dessins annexés dans lesquels:
La figure 1 représente une vue schématique de l'effecteur selon l'invention,
la figure 2 représente une forme de réalisation d'un type de contacts auto-compensés de l'effecteur selon l'invention,
la figure 3 représente une autre forme de réalisation d'un type de contacts auto-compensés de l'effecteur selon l'invention,
la figure 4 représente une vue de détail des contacts de l'effecteur représenté par la figure 3, et
la figure 5 représente une vue de détail des moyens de mesure et de traitement de l'effecteur selon l'invention.

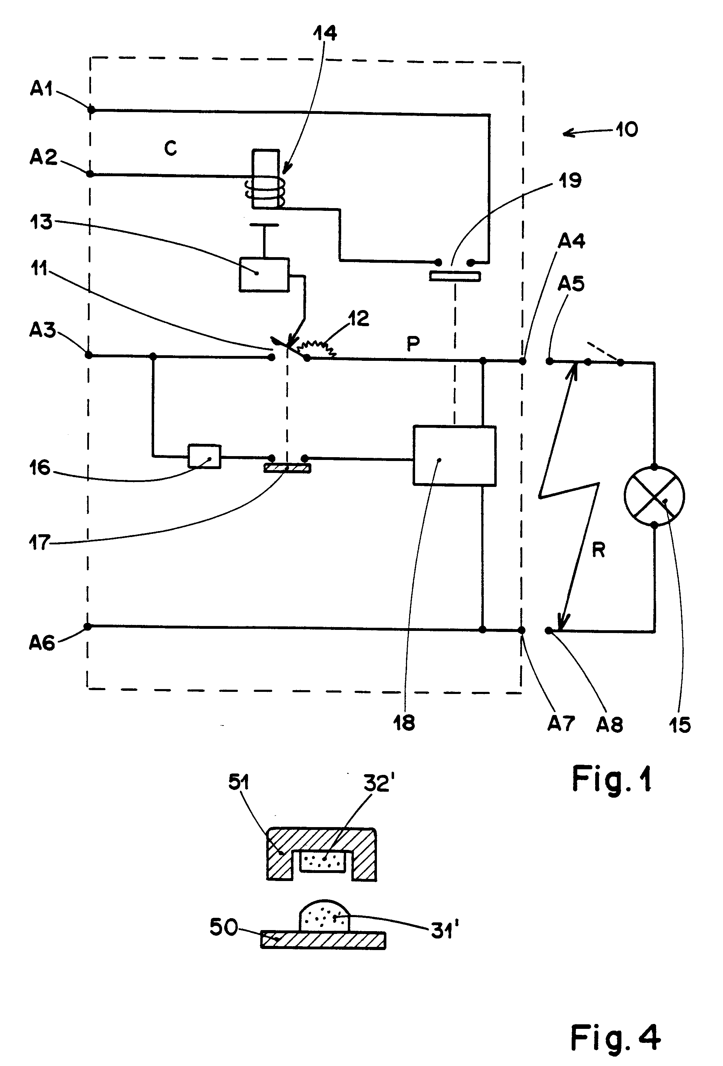

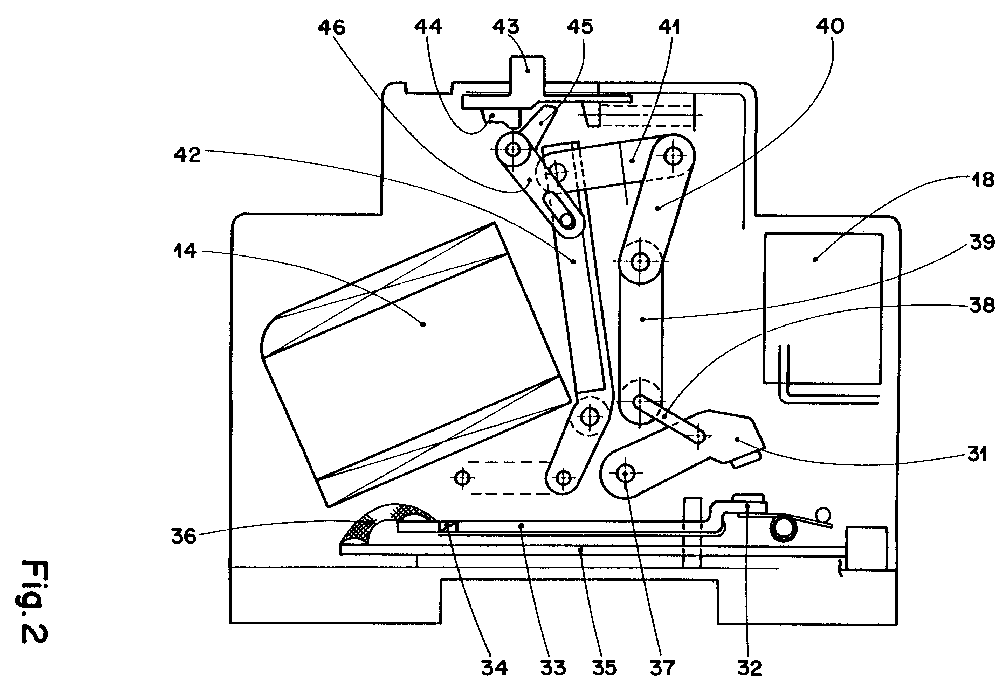

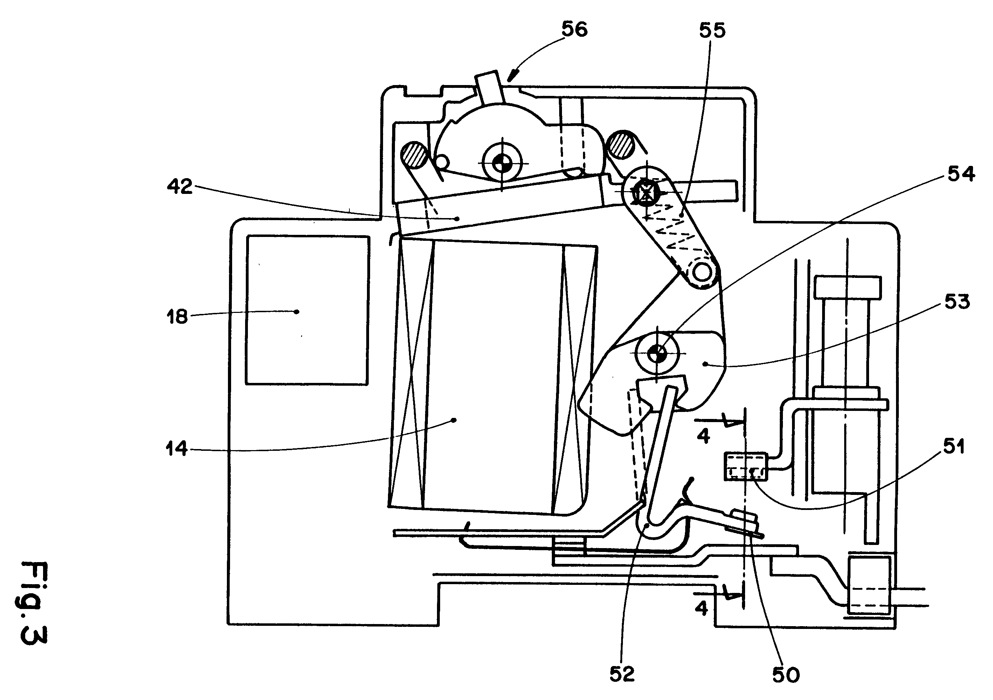

La figure 1 représente schématiquement l'effecteur à contacts protégés contre les soudures en cas de court-circuit. Cet effecteur 10 comporte des contacts de puissance 11 qui sont associés à un ressort 12 de puissance relativement faible mais qui est suffisante pour maintenir les contacts fermés en l'absence de forces de répulsion par striction engendrées par un court-circuit. Ces contacts de puissance sont actionnés par un mécanisme de commande 13 couplé à un électro-aimant de manoeuvre 14. Le circuit dans lequel est monté l'électro-aimant de manoeuvre 14 est appelé circuit de commande C. Ce circuit peut recevoir à ses bornes d'entrée A1, A2 un signal de commande de l'extérieur, au cas où il est couplé à une télécommande ou comporte un bouton-poussoir ou tout autre dispositif de commande manuelle (non représenté).

L'effecteur est destiné à alimenter au moins un récepteur 15 monté dans un circuit appelé circuit R du récepteur. Un circuit de puissance destiné à l'alimentation de ce récepteur est défini par des bornes A₃ et A₄, entre lesquelles sont montés les contacts de puissance 11. La borne A₃ est connectée à la phase du réseau et la borne A₄ est connectée à une borne d'alimentation A₅ du circuit d'alimentation R du récepteur.

Un circuit de puissance de retour est défini par des bornes A₆ et A₇, dont la première est connectée au neutre du réseau et la deuxième à une borne A₈ du circuit d'alimentation R du récepteur.

En parallèle avec les contacts de puissance 11 est prévu un circuit qui comporte une résistance de limitation 16, un contact de circuit d'injection 17, et une unité de mesure et de traitement 18, connectés en série, et dont le rôle sera défini par la suite. L'unité de mesure et de traitement 18 est par ailleurs connectée au circuit de puissance de retour. Enfin, ce circuit est couplé à un contact 19 du circuit de commande C.

L'effecteur décrit ci-dessus fonctionne de la manière suivante. On admet qu'un court-circuit est préétabli dans le circuit d'alimentation R du récepteur et qu'un utilisateur tente d'enclencher une séquence de commande de fermeture. Au repos, les contacts de puissance 11 sont ouverts, mais une tension est injectée à travers la résistance de limitation 16, le contact de circuit d'injection 17 et l'unité de mesure et de traitement 18 vers la borne A₄, ce qui permet à cette dernière de mesurer l'impédance aux bornes A₄ - A₇. Tant que le circuit d'alimentation R du récepteur est en court-circuit, ladite unité de mesure et de traitement 18 le détecte et maintient le contact 19 du circuit de commande C ouvert. Ce circuit de commande est donc inopérant. Ainsi le circuit de puissance ne peut pas être commandé en fermeture lorsqu'un court-circuit est préétabli, ce qui a pour conséquence une préservation des contacts de puissance 11, les risques de rebondissement à la fermeture, et par la suite les risques de soudure, étant supprimés.

Lors d'une séquence de fermeture sur courant nominal, lorsque le circuit d'alimentation R du récepteur ne présente pas de défaut de court-circuit, l'unité de mesure et de traitement 18 ferme le contact 19 du circuit de commande C qui devient opérant. Les contacts de puissance 11 sont fermés par le mécanisme de commande 13 actionné par l'électro-aimant 14 qui est excité. De ce fait, le circuit de puissance est fermé sur courant nominal.

Lorsque apparaît un court-circuit dans le circuit d'alimentation R du récepteur, les contacts de puissance 11 ont tendance à sauter et à se souder. Pour éviter ce phénomène, ils sont équipés d'un système de compensation des forces de répulsion de striction qui les empêche de délester et de se souder. Ce système de compensation peut être de deux types différents.

Un de ces systèmes est du type électrodynamique. Une forme de réalisation de ce dispositif est représenté par la figure 2. Ce dispositif comporte deux contacts 31 et 32 auto-compensés. Ces contacts 31 et 32 sont les contacts de puissance 11 de la figure 1. Le contact 32 est monté à l'extrémité d'une tige 33 articulée autour d'un axe 34. Cette tige est soumise à une force électrodynamique générée par le courant circulant dans une tige fixe 35, sensiblement parallèle à la tige 33, lorsque les contacts 31 - 32 sont fermés. Les deux tiges 33 et 35 sont connectées par un fil ou une tresse souple 36 qui assure leur liaison électrique. Cette force électrodynamique a pour effet de plaquer les contacts 31 et 32 l'un contre l'autre en s'opposant aux répulsions de striction.

Par ailleurs, le contact 31 est articulé sur un axe 37 et est couplé mécaniquement par un jeu de biellettes 38, 39, 40 et 41 à une palette mobile 42 de l'électro-aimant 14 défini dans la description de la figure 1. La fermeture des contacts de puissance peut également être réalisée au moyen d'un bouton de commande coulissant 43 portant une butée 44 agencée pour coopérer avec une manette 45 solidaire d'un bras d'actionnement 46 pivotant et couplé à la palette mobile 42.

Un autre de ces dispositifs est du type électromagnétique. Une forme de réalisation de ce dispositif est représentée par la figure 3. Les contacts 31' et 32' correspondant aux contacts auto-compensés 31 et 32 de la réalisation illustrée par la figure 2 et constituant les contacts de puissance 11 de la figure 1, sont équipés d'un circuit ferromagnétique. La construction de ce circuit est illustrée par la figure 4. Le contact mobile 31' est associé à une palette 50 et le contact fixe 32' est associé à un étrier 51 qui sont agencés pour coopérer et fermer le circuit ferromagnétique lorsque les contacts sont fermés et parcourus par un courant de défaut. Cette force d'attraction électromagnétique s'oppose aux répulsions de striction et empêche la soudure des contacts.

Le contact mobile 31' est monté à l'extrémité d'un bras 52 pivotant et pouvant occuper deux positions stables déterminées par une bascule 53, pivotant autour d'un axe fixe 54 et mécaniquement couplée par une biellette 55 à la palette 42 de l'électro-aimant 14. Un bouton de commande manuelle 56 est prévu pour agir également sur la palette 42.

Dans les deux cas, lorsque le circuit de puissance est fermé et lorsqu'un fort courant de court-circuit survient, les contacts de puissance auto-compensés ne peuvent délester et sont ainsi épargnés des risques de soudure.

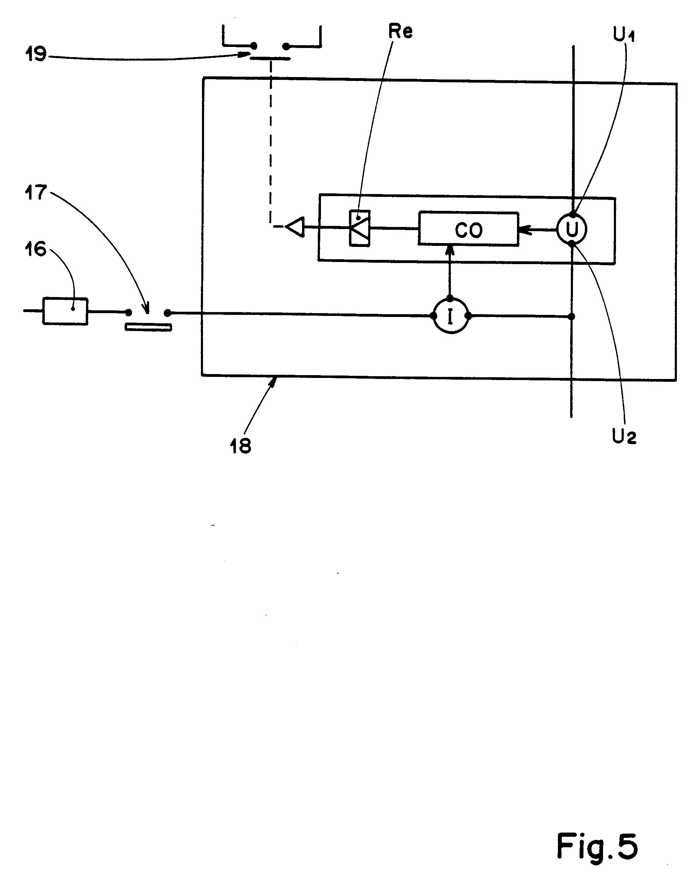

La figure 5 représente en détail l'unité de mesure et de traitement 18. Cette unité comporte un capteur de tension U dont les bornes U₁, et U₂ sont respectivement raccordées au circuit de puissance entre les bornes A₃ et A₄ et au circuit de puissance de retour entre les bornes A₆ et A₇, un capteur d'intensité I monté sur une ligne reliant le contact de circuit d'injection 17 à la borne U₂, un comparateur CO qui reçoit les signaux émis par les deux capteurs et un relais Re. Le comparateur est conçu pour comparer l'impédance du circuit des récepteurs avec une référence prédéterminée qui constitue un seuil. Toute baisse d'impédance en dessous de ce seuil provoque la commande du relais Re mécaniquement couplé au contact 19 du circuit de commande C, ce qui entraîne l'ouverture de ce circuit. Par conséquent, lorsque la valeur de l'impédance du circuit de récepteurs est anormale, la fermeture des contacts de puissance est empêchée.

## Revendications

1. Effecteur électrique comportant:
- un électro-aimant associé à un mécanisme de commande de contacts de puissance d'un circuit électrique pour l'alimentation d'au moins un récepteur,
- un système de compensation des forces de répulsion de striction sur les contacts à puissance résultant d'un court-circuit,
- des moyens pour mesurer l'impédance dudit circuit en position ouverte desdits contacts de puissance, et des moyens pour empêcher la fermeture des contacts de puissance en cas de valeur anormale de cette impédance.

2. Effecteur selon la revendication 1, caractérisé en ce que le système de compensation est du type électrodynamique.

3. Effecteur selon la revendication 1, caractérisé en ce que ledit système de compensation est du type électromagnétique.

4. Effecteur selon la revendication 2, caractérisé en ce que ce système de compensation comporte deux tiges sensiblement parallèles pour l'alimentation de l'un des contacts de puissance, ces tiges étant parcourues par des courants de sens opposé lorsque les deux contacts de puissance (31, 32) sont fermés.

5. Effecteur selon la revendication 4, caractérisé en ce que l'une (35) des tiges est fixe et en ce que l'autre tige (33) est articulée à une de ses extrémités et porte un (32) des contacts de puissance à son autre extrémité.

6. Effecteur selon la revendication 3, caractérisé en ce que les deux contacts de puissance (31', 32') sont respectivement associés à deux éléments d'un circuit ferromagnétique, ce circuit étant fermé lorsque les deux contacts de puissance sont fermés.

7. Effecteur selon la revendication 6, caractérisé en ce que l'un des éléments du circuit ferromagnétique est une palette (50) et l'autre élément est un étrier (51).

8. Effecteur selon la revendication 1, caractérisé en ce que les moyens pour mesurer l'impédance du circuit du récepteur comprennent un capteur de tension (U) et un capteur d'intensité (I) ainsi qu'un comparateur (CO) agencé pour comparer l'impédance du circuit du récepteur avec une valeur seuil.

9. Effecteur selon les revendications 1 et 8, caractérisé en ce que lesdits moyens pour empêcher la fermeture desdits contacts de puissance comportent un relais (Re) et un contact (19) du circuit d'alimentation de l'électro-aimant actionné par ledit relais lorsqu'il reçoit un signal dudit comparateur (CO), ce contact (19) étant agencé pour ouvrir ledit circuit d'alimentation de l'électro-aimant.
